# EUROPEAN PATENT APPLICATION

(11) **EP 1 914 613 A1**
(43) Date of publication of application: **23.04.2008**
(21) Application number: 07118564.9
(22) Date of filing: 16.10.2007
(51) Int. Cl.: G05B 19/409, B24B 49/00

(54) **System and method for managing and controlling an operating machine**

(30) Priority: 16.10.2006 IT MO20060330
(71) Applicant: SCM GROUP S.p.A., 47900 Rimini (IT)
(72) Inventor: Tondelli, Enrico, 47900 Rimini (RN) (IT); Ferrari, Adriano, 47827 Villa Verucchio (RN) (IT)
(74) Representative: Crugnola, Pietro

(57) **Abstract**

A method for managing and controlling an operating machine (2) for machining elements (10), in particular a sanding machine, provided with a management and control system (1) for managing and controlling operational means (11, 12, 13, 14, 15, 16, 17, 18, 19) of said machine (2) provided with interface means (6) for an operator, comprises entering and/or sending operational data and/or adjusting and/or operation parameters of said machine (2) via said interface means (6), said entering and/or sending comprising running operational procedures (20, 30, 40, 50, 60, 70, 70') by means of said system (1) and displaying on said interface means (6) interactive work windows (100W, 200W, 21W, ...) for activating and/or managing said operational procedures (20, 30, 40, 50, 60, 70, 70').

## Description

The present invention relates to a system and a method for managing and controlling an operating machine, in particular a calibrating sanding machine for machining elements, for example panels, frames made of wood or similar material, or sheet metal, metal alloy profiled sections.

A calibrating sanding machine of known type comprises substantially a horizontal conveyor belt, suitable for supporting and moving an element to be machined through a series of successive operating units. The conveyor belt, which acts as a work surface, can be adjustable in height compared with the operating units to enable the machining thickness, i.e. the thickness of the material to be removed by sanding, to be calibrated.

Pressure bars are provided that maintain the element pressed against the belt, in particular during machining. In addition to these, a vacuum device can be connected to the conveyor belt to maintain the element more adhering and locked on the belt during transfer and transit through the operating units.

The sanding machine may comprise one or more calibrating/sanding units with a roller and/or pad longitudinal abrasive belt, one or more sanding units with a transverse abrasive belt, and one or more roller sanding/buffing/structuring units, the number and the type of said units being a function of the machinings to be performed on the elements and of the productivity required of the machine.

In transverse sanding units the abrasive belt, which forms a closed loop, is rotated according to a direction that is orthogonal to the movement direction of the element and is maintained in contact with the surface of the latter by means of a movable buffer or pad.

In the longitudinal sanding units the abrasive belt, which still forms a closed loop, is rotated around a direction parallel to the movement direction of the element, in the same or opposite sense, and is maintained in contact with the surface of the element by means of a roller or a pad or both.

The pads of the transverse and longitudinal sanding units can be of the so-called "sectioned" type, i.e. comprise a plurality of aligned buffers, driven by respective actuators so as to make only defined portions of the abrasive belt abut on the surface to be machined of the element.

Reading means, located upstream of the sanding units, detects the dimensions and the shape of the element (for example a continuous panel or a panel with window) for driving only the actuators that abut on the surface to be sanded. This enables machining to be optimised and, for example, the edges of the element to be preserved from excessive and/or undesired sanding.

The machine further comprises fixed and/or oscillating blowing means for cleaning abrasive belts and for cleaning the conveyor belt, located downstream of the calibrating/sanding units and of the cleaning/buffing/structuring units. The machine also includes a blowing unit for cleaning the element.

The sanding machine may have operating units arranged above the conveyor belt for machining an upper surface of the element (so-called "upper" machine), or operating units arranged below the belt to act on a lower surface of the element (so-called "lower" machine).

So-called "double" machines further exist that comprise operating units arranged on both sides of the conveyor belt for calibrating/sanding both opposite surfaces of the element.

The current management and control systems for these sanding machines generally comprises an industrial computer or PLC (Programmable Logic Controller) that is able to process analogue and/or digital signals coming from sensors and/or directed to actuators present on the machine.

The PLC runs an operational programme for managing the process and the operation of the machine, resident in an internal (RAM or flash) memory or an external (EPROM) memory. The programme is transferred to the PLC and/or is modified by a PC connectable to the PLC and is provided with a suitable programming software.

During operation of the machine the PLC dialogues through electronic signal input/output cards with the devices and apparatuses of the machine such as sensors, motors, actuators, valves, etc, transferring data and commands.

Known systems comprise interface devices arranged for interacting with the PLC so as to enable an operator to introduce data and/or to modify settings and parameters of the operating programme and at the same time enables information on the operation of the machine and on the current operational process to be received and displayed.

Such interface devices generally comprise a monitor or screen on which parameters and values of sensors and actuators of the machine are displayable, and a keyboard or switchboard for manually controlling and/or adjusting the PLC, for example for inserting data, for activating and/or stopping operating units, sensors, actuators, etc.

Some interface devices integrate screen and keyboard in a single touchscreen device (screen sensitive to the touch) that enables the user to interact with the computer touching the screen.

A drawback of the known management and control systems and methods resides in the complexity and laboriousness of the procedures required for calibrating and adjusting the operating machine. The PLC in fact enables the stored operating programme to be run automatically without requiring action on the part of an operator, but interventions for modifying settings and parameters, for example during operation, require complex and delicate manual procedures. In some cases, it is even necessary to connect the PC to the PLC to run partial reprogramming of the latter.

These manual procedures can comprise a plurality of operations and actions to be performed according to a defined sequence. For example, a procedure may consist of actuating a series of pushbuttons and/or switches according to a defined progression and/or combination, of introducing numeric values, of performing direct adjustments and/or interventions on sensors and/or actuators of the machine, etc.

These manual procedures require relatively long running times and the use of specialised suitably trained operators who have been instructed in the operation, management and running of the machine.

In addition thereto, the complexity and laboriousness of these manual procedures may lead operators to commit errors and/or imprecisions that may compromise the correct operation of the machine and cause non-conformant and irregular machinings and/or damage and breakage of operational means of the machine.

An object of the present invention is to improve known systems and methods for managing and controlling operating machines, in particular sanding machines for machining elements made of wood or similar materials or elements made of metal material.

Another object is to obtain a system and a method that enable a plurality of different operational procedures and functions of the operating machine to be stored and run in a rapid, simple and efficient manner.

A still further object is to obtain a system and a method that enable operational procedures to be run in a guided and automatic manner to adjust and configure the machine without requiring a direct manual intervention on operational units and means by an operator.

Still another object is to devise a system and a method that enable errors and/or imprecisions in the operational procedures, in particular in machine configuring and adjusting operational procedures, to be avoided or considerably reduced.

A further object is to provide a management and control system and a method that are easy and instinctive for an operator to use.

In a first aspect of the invention there is provided a method for managing and controlling an operating machine for machining elements, in particular a sanding machine, provided with a management and control system for managing and controlling operational means of said machine provided with interface means for an operator, comprising entering and/or sending data and/or adjusting and/or operating operational parameters of said machine via said interface means, said entering and/or sending comprising running operational procedures by means of said system and displaying on said interface means interactive work windows for activating and/or managing said operational procedures.

In a second aspect of the invention there is provided a system for remote transmission and management of data of an operating machine, in particular a sanding machine, comprising first control and management means of said machine and second control and management means, provided with interface means for an operator and connected to said first control and management means for exchanging signals and/or data with the latter, said second control and management means being arranged for processing via said interface means operational work parameters and/or programmes to be sent to said first control and management means to control and manage the adjusting and/or operation of said machine.

Owing to the first and to the second aspect of the invention it is possible to obtain a method and a system that enable a plurality of different procedures and operating functions of the operating machine to be obtained in a rapid, simple and effective manner. It is in fact possible to enter and/or send operational data and/or parameters to adjust and configure the operating machine and control and manage the operation thereof by running defined operational procedures, which are implementable and actuatable by interface means of the management and control means.

Each procedure comprises one or more phases, during which it is possible to interact with the operating machine in a complete and precise manner without the need to intervene directly and manually thereupon. Such operational procedures, automatically implemented by the system, also guide th operator in performing the various operations and control and management functions, enabling errors or imprecisions to be avoided, or considerably reduced, that direct interventions could cause. Further, as the aforesaid operational procedures are activatable and manageable through interactive work windows displayed by the interface means, controlling and managing the operating machine are relatively easy and instinctive for an operator.

The invention can be better understood and implemented with reference to the attached drawings that illustrate an embodiment thereof by way of non-limiting example, in which:
Figure 1 is a schematic view of the system of the invention for managing and controlling an operating machine, in particular a sanding machine;
Figure 2 is a schematic frontal view of a sanding machine;
Figures 3A-3H are block diagrams that illustrate the method for managing and controlling an operating machine according to the invention;
Figures 4 to 31 are windows displayed by a monitor of the system in Figure 1 for running the management and control method for managing and controlling Figures 3A-3H;
Figure 32 is a schematic frontal view of a machining line comprising two sanding machines connected by a further conveyor belt.

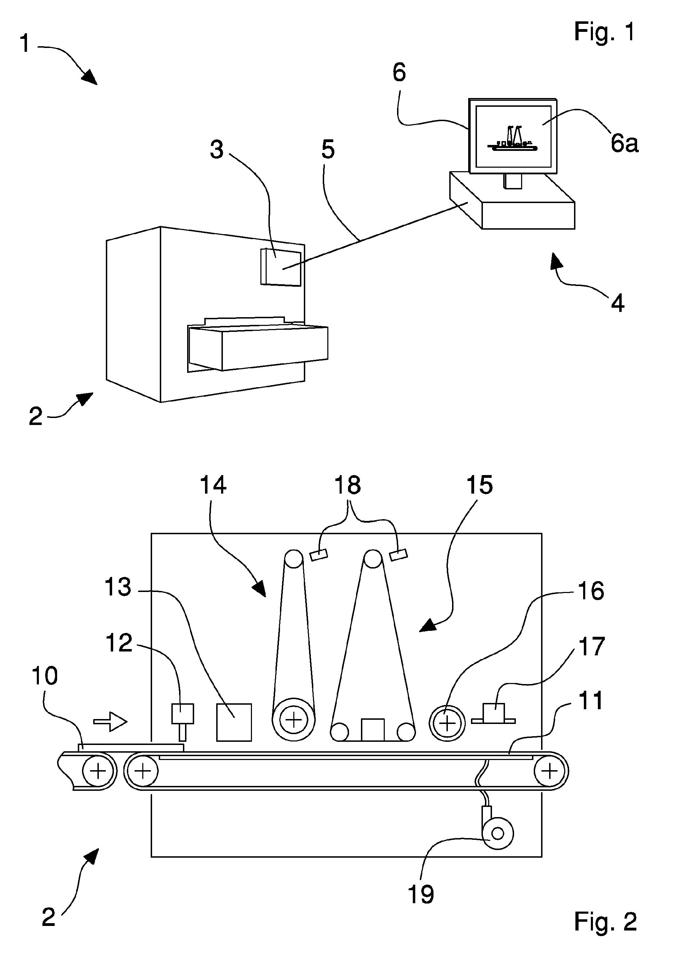

With reference to Figures 1 and 2, there is schematically illustrated a system 1 for managing and controlling an operating machine 2, in particular a calibrating sanding machine arranged for machining elements 10, for example panels of wood or similar material or sheet metal or metal profiled sections.

The system 1 comprises first control and management means 3 of said machine 2 and second control and management means 4, the latter provided with interface means 6 for an operator and connected to said first control and management means 3 via connecting means 5.

The first control and management means 3 comprises an industrial computer or programmable logic controller PLC that is able to process analogue and/or digital signals coming from and/or directed to operational means and devices of the machine, such as sensors, actuators. The PLC 3 is arranged for running an operational operation programme of the machine 2 for running a work process automatically.

The second control and management means 4 includes a computer or personal computer PC provided with interface means 6 comprising a screen or monitor 6a, for example a touchscreen thin film transistor (TFT) colour liquid crystal display (LCD) arranged on the machine or in a remote position.

The computer is provided with a standard operating system, for example Windows XP Professional® of Microsoft Corporation®, to enable a software programme to be run that implements the method of the invention for managing and controlling the machine 2 by means of the PLC 3.

Alternatively, the second control and management means 4 can comprise a programmable operator terminal of commercial type, for example the model 4PP120 of B&R, provided with respective interface means that includes a touchscreen thin film transistor (TFT) colour liquid crystal display (LCD) of dimensions comprised between 5 and 12 inches. In this case, the interface means 4 can be mounted directly on the machine 2.

On the programmable terminal, provided with a non-volatile memory, a software programme is run for managing and controlling the machine 2 by means of the PLC 3, which is substantially similar to that used in the computer, apart from differences linked to the programming language and to the hardware structure of the terminal.

The connecting means 5 are data transmission channels that enable first control means 3 and second control and management means 4 to be connected via standard transmission protocols, for example CAN BUS, Profibus, Modbus, etc channels according to the specific speed requirements and/or quantities of data to be transmitted.

The sanding machine 2 is provided with conveying means 11, comprising a movable closed loop belt or mat, arranged for supporting and moving an element to be machined 10 through a plurality of operational means with a defined advance speed.

Vacuum means 19 can be connected to the conveyor belt 11 to ensure greater adhesion of the element 10 owing to suction.

In the specific case, the machine 2 comprises, at an inlet portion thereof, reading means or a sectioned barrier 12, configured for detecting the size and the shape of the element 10 that is introduced into the machine 2. Known reading means 12 comprises a plurality of aligned reading sectors that are activated when the element passes.

Downstream of the reading means 12 and in succession one after there are provided the other first operational calibrating/sanding means 13, with a transverse abrasive belt, with a sectioned pad, second operational calibrating/sanding means 14, with a longitudinal roller abrasive belt, third calibrating/sanding means 15, with a longitudinal sectioned pad abrasive belt, roller cleaning/buffing operational means 16, and operational blowing means 17, the latter arranged at the outlet portion of the machine.

The sequence of the various operational calibrating/sanding means with a longitudinal and transverse abrasive belt may be different from the one disclosed in function of the composition of the machine and the machinings to be run.

Further fixed and/or oscillating operational blowing means 18 is further provided at the second and third calibrating/sanding means for cleaning the respective abrasive belts and the conveyor belt 11.

The machine 2 illustrated is of the upper type, but it may comprise any number of upper and/or lower operational means for machining one or both sides of the element 10.

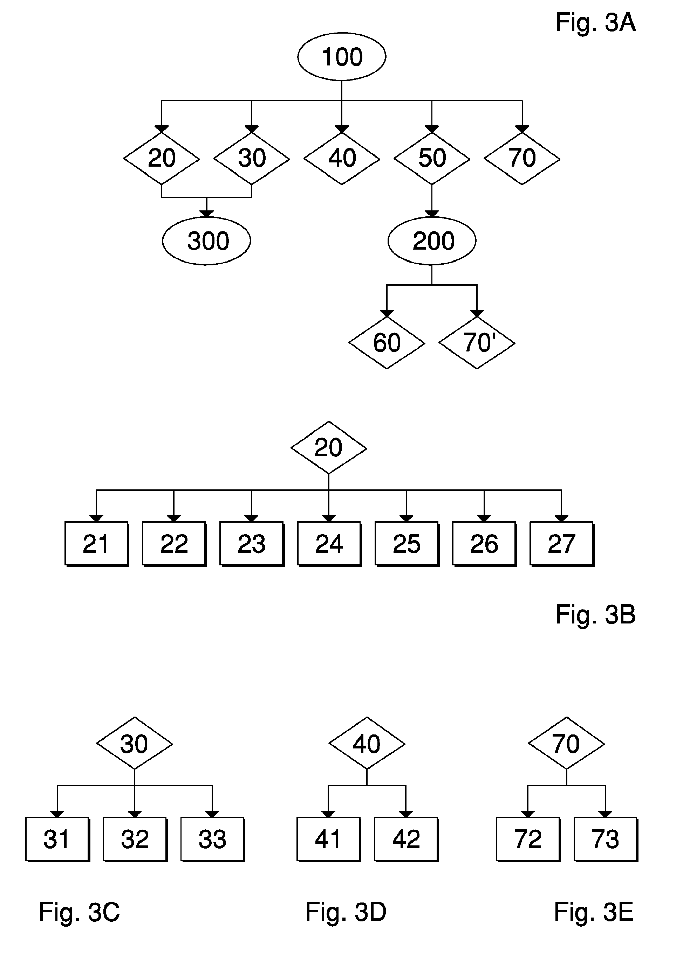

With reference to Figures 3A-3H, there is illustrated a plurality of block diagrams or flow charts that disclose the functional structure according to which the system 1 of the invention operates and by means of which the corresponding method is actuated for managing and checking the machine 2.

In particular, the structure comprises a plurality of blocks or functional elements with each of which there is associated a particular operating status of the system 1 and/or of the machine 2, a runnable operational procedure and respective actuation phases or steps.

The method is actuated by means of a software programme run by the second control and management means 4.

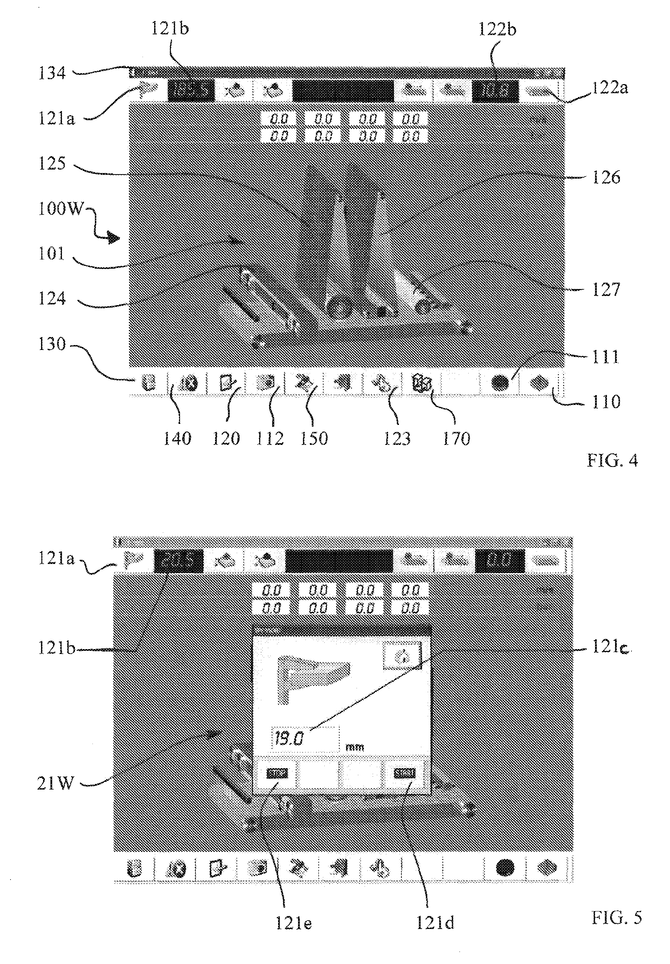

At the moment of startup of the machine 2, the system 1 is arranged in an initial status 100, to which on the screen 6a of the interface means 6 there corresponds a main window 100W (Figure 4) in which there is shown a schematic Figure 101 that illustrates the configuration or composition of the machine 2, i.e. the number and type of the operational means current therein.

The main window 100W enables a plurality of values/data to be displayed relating to settings and adjustments of the machine and operational operating parameters, and enables different procedures or operations to be run.

In practice, with reference to the block diagram in Figure 3A, starting from the initial status 100, it is possible to activate the following operational procedures, to which respective windows for inputting and/or displaying data correspond:
- calibrating and adjusting procedure 20 that enables work settings and functional parameters of the operational means of the machine 2 to be modified;
- work programmes management procedure 30 run by the machine in operation;
- alarms and diagnostics management procedure 40 that enables active alarms and respective error codes to be displayed;
- utility management procedure 50 of the system by means of which it is possible to run a plurality of different operations and functions, for example running tests to test the correct operation of the operational means, accessing technical documentation of the machine, etc.
- general configuration procedure 60 for defining parameters and settings closely linked to the structure and the features of the machine (number and type of the operational means, of the sensors, etc.);
- combined online management procedure 70, 70' by means of which it is possible to control, in addition to the sanding machine 2, a further sanding machine 2' arranged in line.

The aforesaid operational procedures and the corresponding phases are activated by corresponding pushbuttons in the main window 100W.

In the calibrating and adjusting procedure 20 it is possible to intervene on the operational units and devices of the machine to modify the settings thereof, activating respective procedures to which corresponding programming pages correspond that are displayable on the screen 6a.

In particular, in the calibrating and adjusting procedure 20 it is possible to adjust the sanding thickness of the element (phase 21), the conveyor belt 11 advance speed (phase 22), manage the vacuum means applied to the conveyor belt 11 (phase 23), programme and adjust the operational units and devices (procedure 24, 25, 26, 27), as indicated in the block diagram in Figure 3B.

From the main window 100W, by pressing a first key 121a it is thus possible to access a window for programming the thickness 21W that enables the thickness value (set point value) that it is desired to obtain on the workpiece (Figure 5) to be introduced into a respective box 121c. The actual thickness value (actual value) is obtained in a first box 121b of the main window 100W.

A thickness actuating key 121d makes the introduced modification active, whilst a thickness arrest key 121e determines the arrest of the current adjustment.

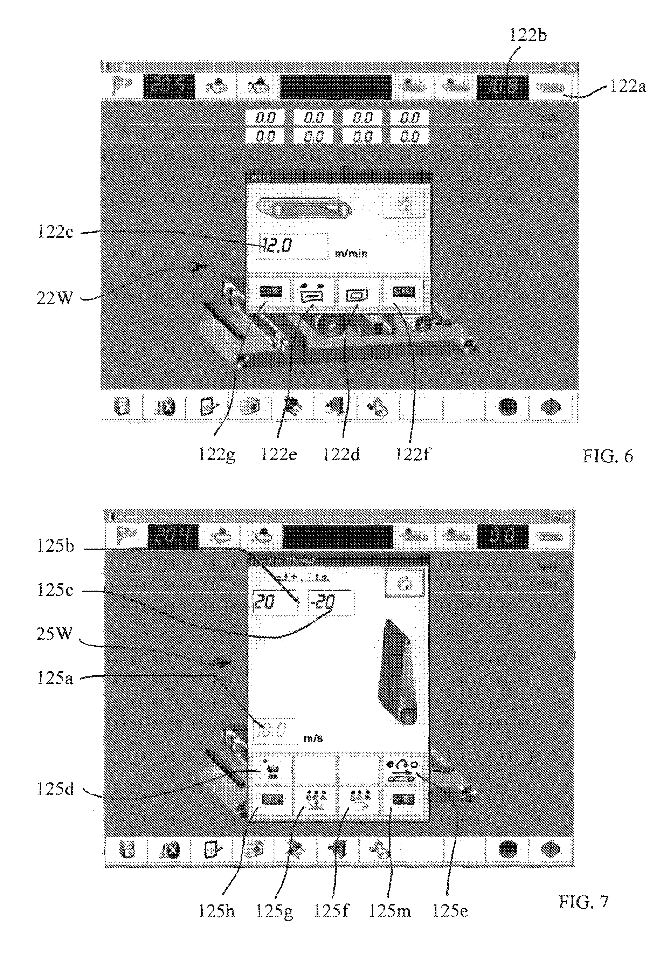

Similarly, by activating a second function key 122a a speed programming window 22W is accessed that enables the advance speed value (set point speed) that is desired for the conveyor belt 11 (Figure 6) to be introduced into a respective box 122c. The actual speed value is displayed in a second box 122b in the main window 100W.

The speed programming window 22W further enables the so-called "windowless" function to be enabled/disabled(windowless function 122d activation/deactivation key) that enables flat cornice-shaped elements to be machined in an optimal manner and the belt motor to be switched on/off(start key 122e) for manual operation of the machine 2.

An advance actuation key 122f makes the introduced settings active whilst an advance stop key 122g stops the advance of the conveyor belt 11.

The main window 100W further comprises a third function key 123 that enables the vacuum means 19 applied to the conveyor belt 11 to be switched on or off.

In order to access the programming windows of the first operational means 13, second operational means 14, third operational means 15 and fourth operational means 16 of the machine 2 it is sufficient to touch the screen 6a at sensitive areas 124, 125, 126, 127 in which are shown, in the main window 100W, the aforesaid respective operational means 13, 14, 15, 16. The sensitive areas 124, 125, 126, 127 act as pushbuttons and cause the respective operational procedures to start up and the programming windows to open by means of which it is possible to enter and modify the operating parameters and the settings of the single operational means.

By way of example, for the second longitudinal roller sanding means 14, by means of the respective programming window 25W (Figure 7) it is possible to set the value of the rotation speed of the abrasive belt, in a belt speed box 125a, and the time values that define the intervention thereof, the activation and deactivation on the element to be machined (intervention value boxes 125b, 125c). Function keys further enable the motor of the operational means (motor startup key 125d) to be started up directly, the speed thereof to be adjusted in a discrete or continuous manner for manual operation by the machine 2, as explained in greater detail later in the description.

Further functional pushbuttons enable the rotation direction of the abrasive belt to be changed (rotation direction key 125e), the intervention of the roller on the element to be selected (absent, continuous, activated only in the presence of an element 10 - intervention key 125g), the intervention of the blowing devices for cleaning the abrasive belt (absent, continuous, activated only in the presence of an element 10 - blowers key 125f).

An operational unit stop key 125h enables the operational unit to be stopped, whilst an operational unit 125m modifications actuation key makes the introduced settings active.

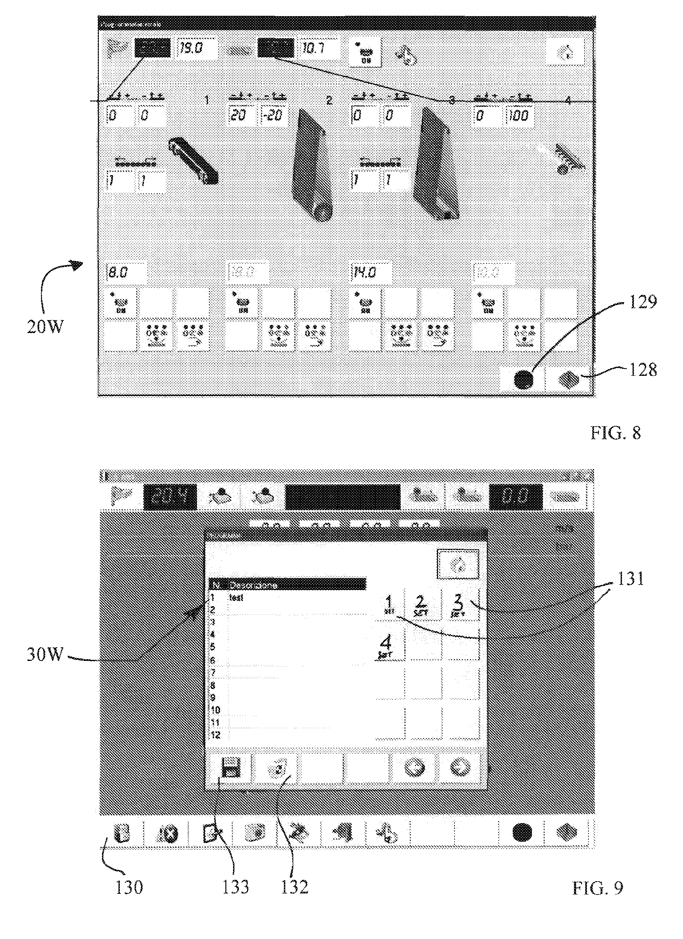

The diverse operational procedures disclosed above of the calibrating and adjusting procedure 20, are also runnable through a general programming window 20W that can be opened starting with the main window 100W by acting on a fourth function key 120. As illustrated in Figure 8, the general programming window 20W summarises in itself the programming window of the thickness 21W, the programming window of the advance speed 22W, and the programming windows of the operating units 13, 14, 15, 16.

The general programming window 20W comprises an actuation key 128 that enables the settings made to be actuated and made operational and a respective stop key 129 that enables the machine 2 to be stopped completely.

In the work programmes management procedure 30 it is possible to load (phase 31), delete (phase 32) and store (phase 33) work programmes intended for being run by the PLC 3 for automatic operation of the machine 2 (Figure 3C).

From the main window 100W it is thus possible to access, by pressing a fourth function key 130, a programme management window 30W in which the work programmes are displayed that are stored in the second management and control means 4 (Figure 9).

By pressing a respective loading key 131 the desired work programme can be loaded and the main window 100W can be returned to. The name of the loaded programme that will manage the operation of the machine 2 is displayed at the main window 100W, for example at an upper angle of a frame of said window (programme name 134).

It is further possible to delete a programme from the list by using a respective deletion key 132. The storage or saving phase 33 of a work programme is activated by a respective saving key 133 that enables the name of the programme in question to be placed on the list.

In the saved work programme there are contained all the settings, adjustments and calibrations run on the machine in the course of the operational procedures of the various operational procedures.

The alarms management procedure 40 (Figure 3D) enables the diagnostics of the system 1 and of the machine 2 to be run by displaying the active alarms and the corresponding error codes. It is possible to display the details and the corresponding diagnostics of each alarm (phase 41) and/or to reset all the active alarms (phase 42).

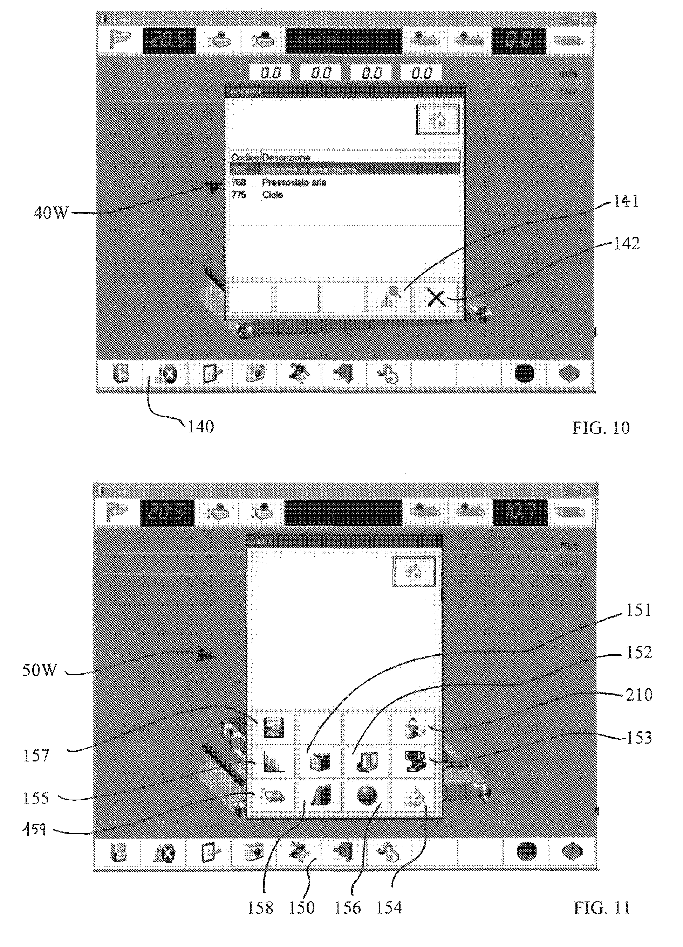

In order to access the alarms management procedure 40 it is necessary to press a fifth function key 140 on the main window 100W that enables an alarms management window 40W (Figure 10) to be opened in which a list of all the alarms and the active emergencies and the respective error codes are displayed. By selecting a single alarm from the list and pushing a detail display key 141 it is possible to open an information page, for example a text file or a file in pdf format (Portable Document Format of Adobe Systems), in which there is disclosed with precision the type of alarm and the test and restoration procedure to be run to eliminate the alarm in question.

An alarms reset key 142 enables all the active alarms to be reset so as to enable the machine 2 to be started up again.

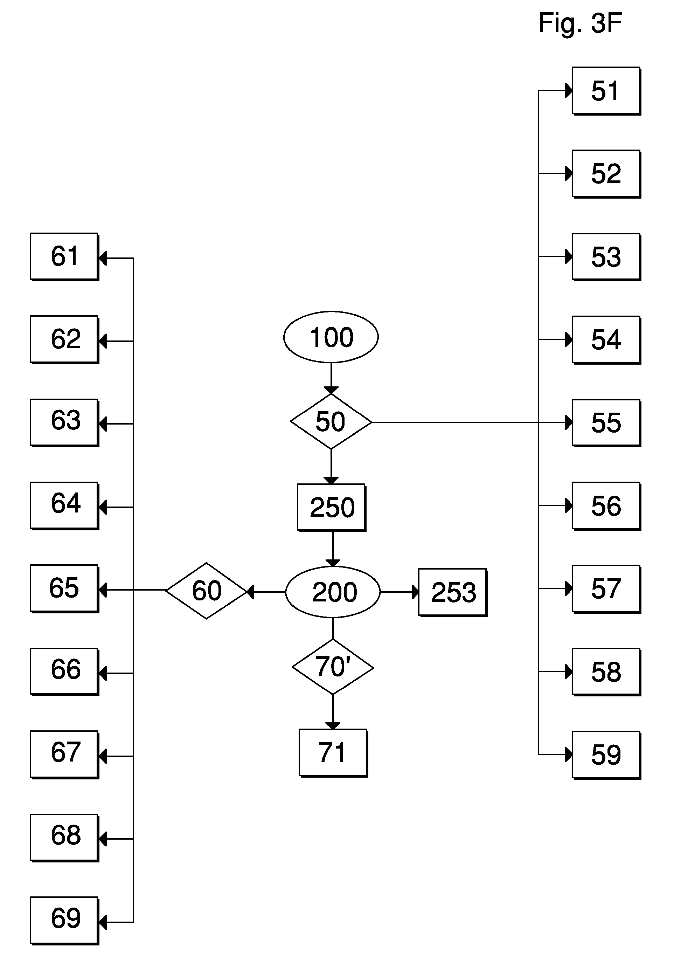

The utilities 50 management procedure (Figure 3F) enables tests to be run to check correct operation of operating units of the machine (procedure 51, 52, 53), generate a concise production report (phase 54), check consumption of the abrasive ribbon of the calibrating/sanding means (phase 55), establish general settings such as language and measuring unit (phase 56), store a text file containing the machine configuration parameters and the work programme in use (phase 57), access the technical documentation of the machine (phase 58), and empty the machine (phase 59).

In the utilities 50 management procedure it is further possible, by inserting an identifying key (phase 250), to take the system 1 from the initial programming status 100 to a protected configuration status 200 from which it is possible to run a test for checking the correct operation of the sectioned pads of the first operational means 13 and of the third operational means 15 of the machine (phase 253) and/or to access the general configuration procedure 60 and the combined line management procedure 70', exposed in detail below in the description.

From the main window 100W it is possible to access, by pressing a sixth function key 150, a utility management page 50W in which there is displayed a plurality of function keys, each of which is arranged for activating a corresponding operational step and the corresponding display page (Figure 11).

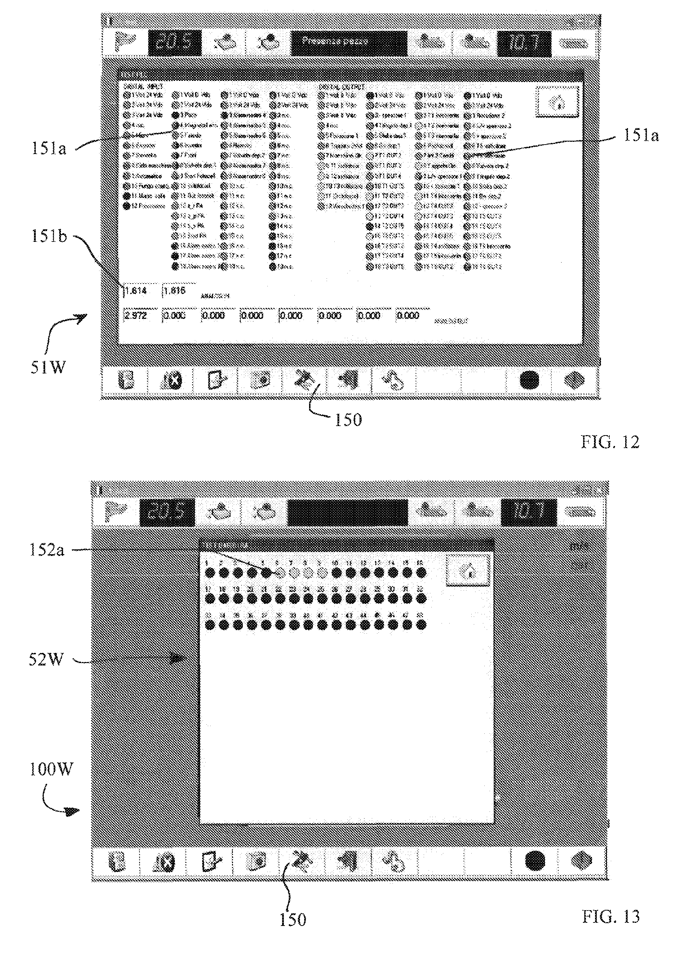

A test key PLC 151 enables the test phase PLC 51 to be run, opening a test window PLC 51W in which all the input and output, digital and analogue signals of the PLC 3 are displayed. For each digital signal there is indicated the corresponding status and for each analogue signal the respective value respectively by means of luminous LEDs 151a and numeric boxes 151b (Figure 12).

A barrier test key 152 enables the test phase of the reading means 12 to be run, opening the barrier test window 52W that displays the operation of the sectors of said reading means. In particular, a plurality of numbered LEDs 152a are displayed, each of which corresponds to a reading sector of said device 12. In the case of correct operation, the switching-on of the corresponding LED in the window (Figure 13) must correspond to the excitation of a sector.

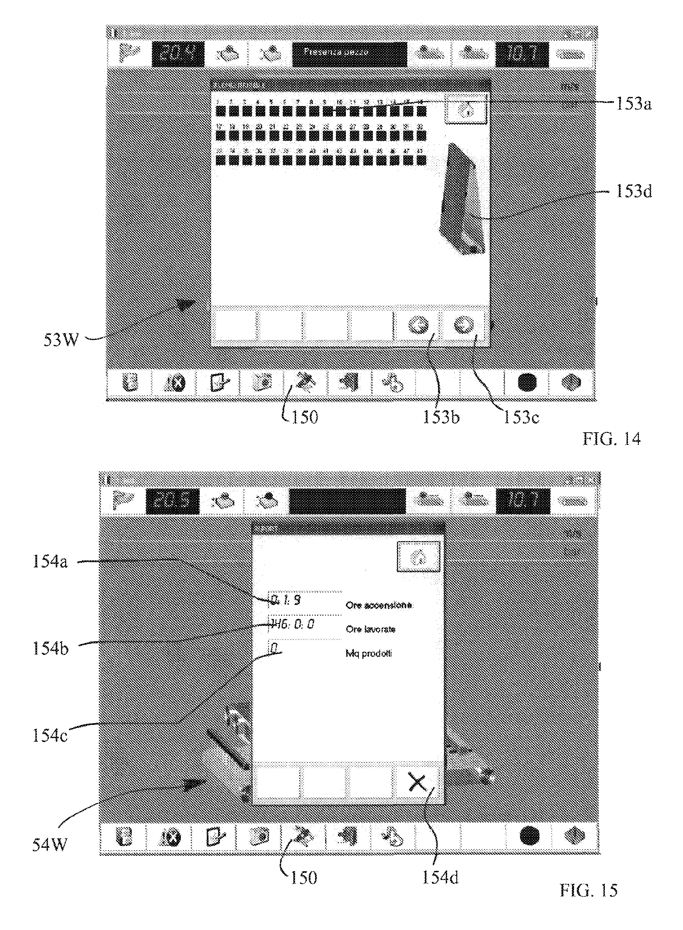

A buffer test key 153 enables the buffers pads test phase to be run, opening a buffer test page 53W that displays the operation of the buffers that form the sectioned pads of the first sanding means 13 and of the second sanding means 15. In particular, a plurality of numbered squares 153a are displayed, each of which corresponds to a buffer on the respective pad. In the case of correct operation, the lighting of the corresponding square on the window must correspond to the excitation of a buffer. Respective cursor keys 153b, 153c enable the desired sanding means to be selected, which is represented schematically in the window by a respective Figure 153d (Figure 14).

A production report key 154 enables a production report page 54W to be entered in which the parameter values linked to production are displayed, such as, for example, the number of hours during which the machine (box 154a) is switched on, the number of hours worked (box 154b), the number of square metres of machined product (box 154c). A resetting key 154d enables all the values of the aforesaid production parameters (Figure 15) to be reset.

The phase 55 of testing the consumption of the abrasive paper belts of the calibrating/sanding units is run by activating a belt consumption function key 155 that opens a belt consumption 55W phase, in which there is displayed, in the form of a histogram 155a, the consumption of the abrasive belts, in linear metres (box 155b), of the operating means.

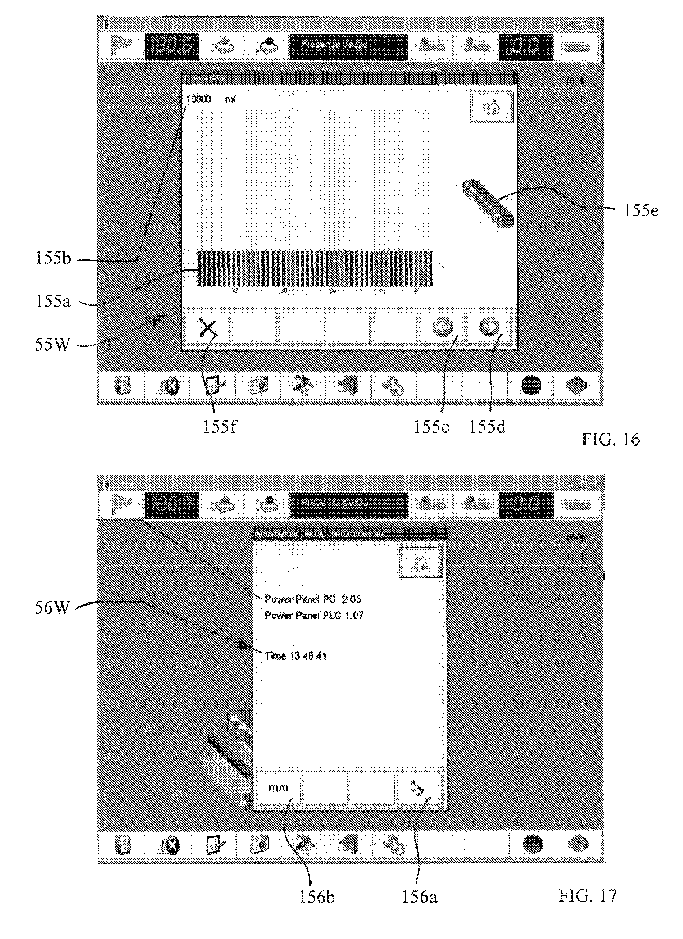

The columns of the histogram correspond to the sectors of the reading means 12. Respective cursor keys 155c, 155d enable the desired sanding means to be selected, which are represented schematically in the window by a respective Figure 155e. A respective resetting key 155f enables all the values of the aforesaid production parameters (Figure 16) to be reset.

A function key of general settings 156 enables the definition phase 56 of the general settings to be run by opening a general settings page 56W in which the active date and time are displayed, the embodiment of the software programmes of the management and control means 3, 4 (Figure 17). There are further a language selection key 156a and a unit of measurement selection key 156b for respectively selecting the language of communication of the system (Italian, English,

German, etc.) and the linear unit of measurement (mm/inch).

The utility management page 50W further comprises a file saving function key 157 by means of which it is possible to run the storage phase in the memory of the computer 4 of a text file containing machine configuration parameters 2 and of a work programme in use. The configuration parameters are defined in the general configuration procedure 60 disclosed below.

A documentation access function key 158 is provided by means of which it is possible to access the documentation of the machine (wiring diagram, pneumatic diagram, control, diagnostics manual, etc). The documentation is, for example, displayed on the screen on a suitable page.

The machine emptying phase 59 is runnable by pressing a machine emptying function key 159 that enables an element 10 being machined to exit even with the machine 2 in alarm status or without a set work programme. The emptying phase 59 causes a defined quantity of the machine to open to disengage the operating units from the element 10 and the conveyor belt 11 to be subsequently driven for the exit of the element.

The utility management page 50W comprises an access key 210 with protected functions that enables the phase 250 of inserting an identifying key (password) to be run to take the system 1 from initial programming status 100 to protected configuration status 200, to which a main protected window 200W corresponds.

By pushing the same access key 210 it is possible to return the system to initial programming status 100.

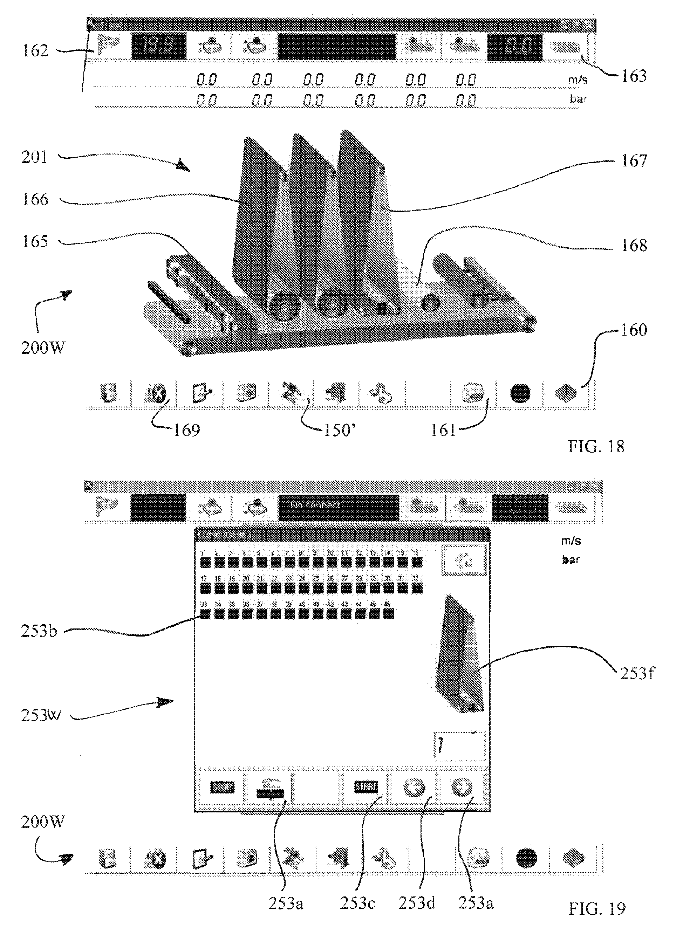

The main protected window 200W is substantially identical to the main window 100W and has a plurality of function keys by means of which it is possible to access the test phase 253 of testing sectioned pads and the various operational procedures of the general configuration procedure 60 (Figure 18).

Introducing protected configuration status 200 becomes necessary to prevent unauthorised personnel performing operations and interventions and/or modifying parameters and settings that are closely linked to the structure and the features of the machine, with the risk of compromising the correct operation thereof and/or causing damage thereto.

The main configuration window 200W has a respective sixth function key 150' that opens the utility management page 50W. In the protected configuration status 200, the buffer test function key 153 activates the test phase of the sectioned pads 253 with the opening of a buffer forcing page 253W (Figure 19). On this page, for each of the sanding means provided with a sectioned pad it is possible to test the operation of the single buffers.

In particular, it is possible to drive the buffers of each sectioned pad according to different test procedures, selectable with a test selection key 253a. Respective numbered squares 253b check the correct operation of the buffers driven by a test actuation key 253c. Respective cursor keys 253d, 253e enable the desired sanding means to be selected, which are represented schematically in the window by a respective Figure 253f.

In the general configuration procedure 60 (Figure 3F) it is possible to define and set a plurality of general machine parameters (phase 61), parameters relating to managing the thickness (phase 62), parameters relating to managing the conveyor belt 11 advance speed (phase 63), managing the vacuum means (phase 64), configuring the operational means (phases 65, 66, 67, 68), configuring alarms and emergencies (phase 69).

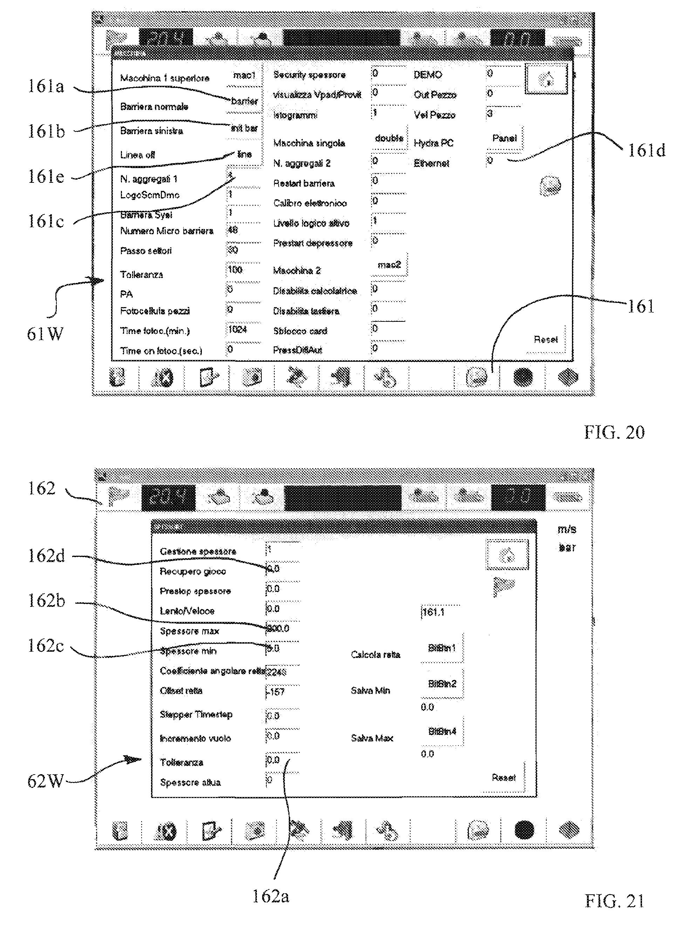

The main protected window 200W comprises a seventh function key 161 by activating which it is possible to run the general parameters setting phase 61 by opening a first configuring page 61W (Figure 20). The latter enables a plurality of values and parameters of the sanding operational means of the machine to be set and adjusted. It is, for example, possible to configure the reading means 12 (boxes 161a, 161b), define the number of calibrating/sanding means in the machine 2 (box 161c), define the connecting procedure between the first control and management means 3 and the second control and management means 4 (box 161d), define the line type in which the machine is inserted (box 161e), etc.

If the machine 2 is combined in line with a second operating machine 2' with master-slave-type combined management, in the main windows 100W and in the main protected window 200W there will appear respective access function keys for accessing master-slave management for running corresponding operational procedures, as explained in greater detail below in the description.

Enabling the master-slave management must be carried out on both sanding machines 2, 2'.

The main protected window 200W further has an eighth function key 162, activating which causes a second configuring page 62W to open to run the corresponding configuration phase 62 of configuring the machining thickness (Figure 21). By means of said second configuring page 62W it is possible to set a plurality of values and settings required to obtain machined elements having a set thickness. These parameters comprise, for example, the permitted machining tolerance (box 162a), maximum and minimum thickness value (boxes 162b, 162c), clearance recovery value (box 162d), etc.

It is further possible to calibrate gauges that measure the position of the conveyor belt 11 with respect to operating units.

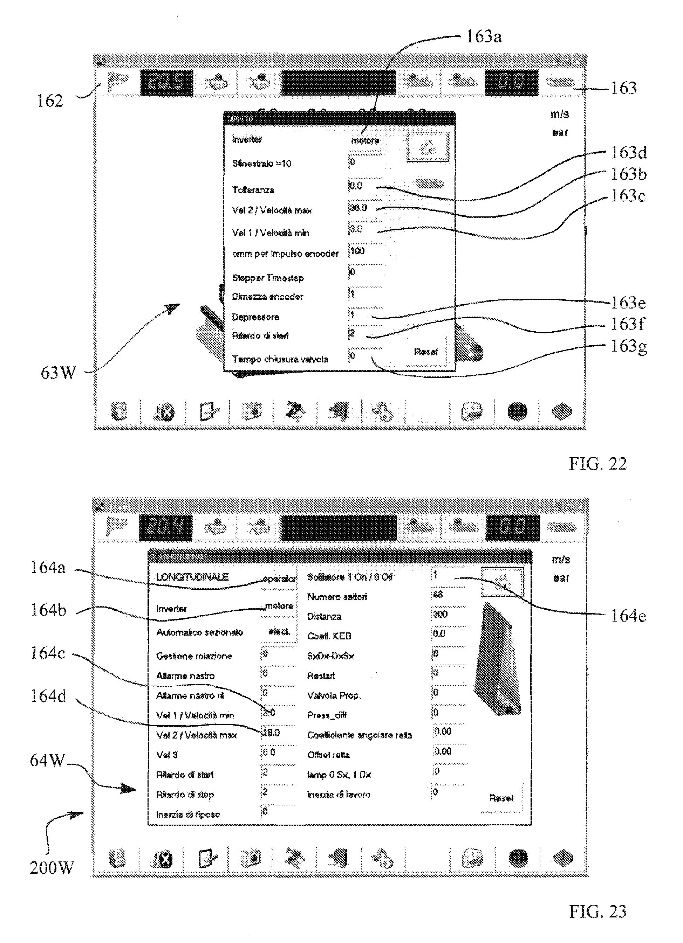

There is provided a ninth function key 163 in the main protected window 200W that opens a third configuring window 63W that enables the management phase 63 of the conveyor belt 11 advance speed and the management phase 64 of the vacuum means (Figure 22) to be adjusted.

By means of the third configuring window 63W it is thus possible to set the type of control acting on the motor of the conveyor belt 11, for example with a speed variator or with an inverter (key 163a), define the maximum and minimum values of the advance speed (boxes 163b, 163c) and the permitted tolerance (box 163d), etc.

The same third configuring page 63W further enables the vacuum means 19 to be managed, establishing the presence thereof on the machine (box 163e), defining the startup time required for the motor of the device to reach operating speed (box 163f) and the closing time of a valve of the device before complete startup (box 163g).

In order to run the configuration procedures of the first operational means 13, second operational means 14, third operational means 15 and fourth operational means 16 of the machine 2 and open respective configuring windows, it is necessary to touch respective sensitive areas 165, 166, 167, 168 of the screen 6a that correspond, in the main protected window 200W, to the graphical representation 201 of the respective operational means 13, 14, 15, 16 of the sanding machine 2.

For each of the operational calibrating/sanding means it is possible to set by means of a respective fourth configuring page 64W the type of sanding means (transverse, longitudinal - function key 164a), select the type of motor (at one, two, three speeds, with inverter - function key 164b), minimum and maximum speed of the abrasive belt (boxes 164c, 164d), enable the corresponding blowing means for cleaning the abrasive belt (box 164e), etc. (Figure 23).

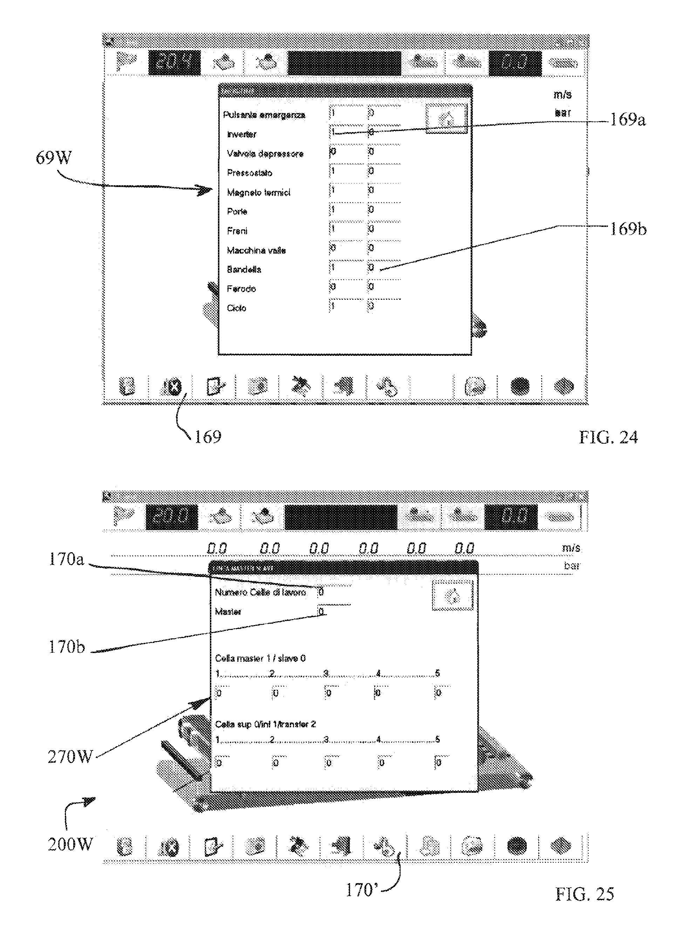

The main protected window 200W comprises a tenth function key 169 that opens a fifth configuring page 69W that enables the phase of configuring alarms and emergencies 69 to be run (Figure 24). In particular, in the fifth configuring page 69W the list of the available alarms is displayed, for each of which the enabling (boxes 169a) and/or the storage method (boxes 169b) can be arranged.

An eleventh function key 160 of the main protected window 200W enables the parameters and settings defined with the operational phases of the general configuration procedure 60 to be sent to the first control and management means 3.

The combined line management procedure 70, 70' is activatable, as previously disclosed, only after selecting in both the sanding machines (first machine master 2 and second machine slave 2') the combined master-slave type management, in the setting phase 61 of the general parameters in the general configuration procedure 60.

The two sanding machines 2, 2' are connected by a further conveyor belt 8 arranged for transferring an element to be machined 10 by the first machine master 2 to the second machine slave 2' (Figure 32).

The combined line management method 70' (Figure 3F) in the protected configuration status 200 enables the line constituted by the first operating machine 2 and by the second operating machine 2' to be configured (phase 71).

The combined line management method 70 in the initial programming status 100 enables the operating units of the two machines to be calibrated and adjusted to modify the settings thereof (procedure 72, 73), recall the work programmes management procedure 30 and the alarms management procedure 40 (Figure 3E).

In the main protected window 200W a master-slave management access key 170' opens a line configuring window 270W in which it is possible to set a plurality of parameters, such as, for example, the number of work cells in the line (box 170a), the type of work cell (box 170b), etc. (Figure 25).

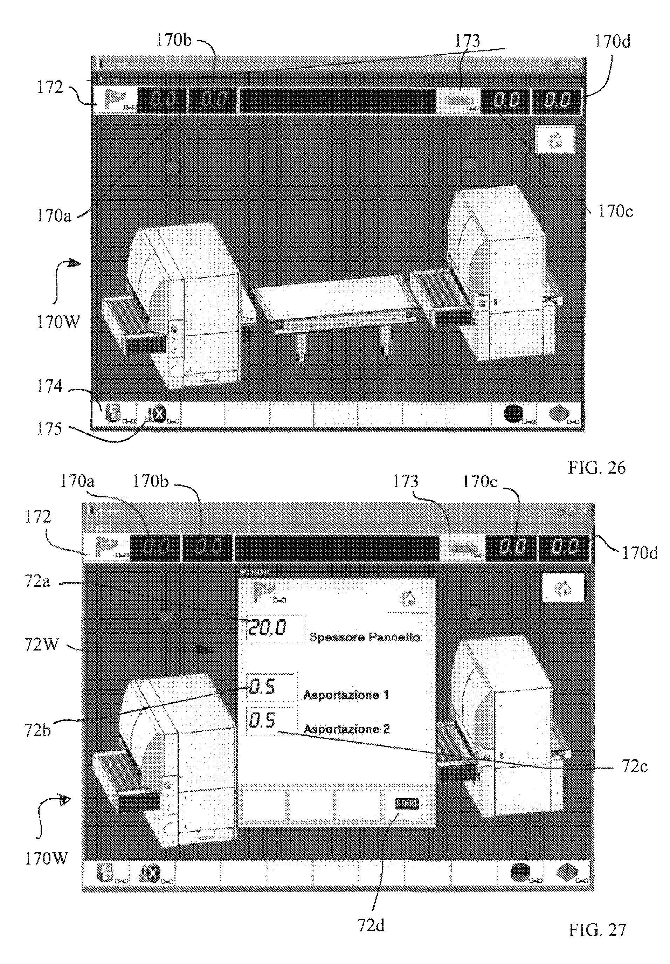

From the main window 100W, by means of a respective access pushbutton giving access to master-slave 170 management, it is on the other hand possible to open a line programming window 170W in which the real values of machining thickness (thickness boxes 170a, 170b) and of advance speed (speed boxes 170c, 170d) for the two machines 2, 2' (Figure 26) are displayed. In the line programming window 170W the two machines are schematically shown connected.

The line programming window 170W has a thickness programming key 172 that opens a thickness adjusting window 72W to run the thickness programming phase 72 (Figure 27). In this window it is possible to set the desired thickness value of the element 10 being machined (panel thickness box 72a) and the removal values for the first machine 2 and the second machine 2' (removal boxes 72b, 72c). A respective activation key 72d makes the introduced settings active.

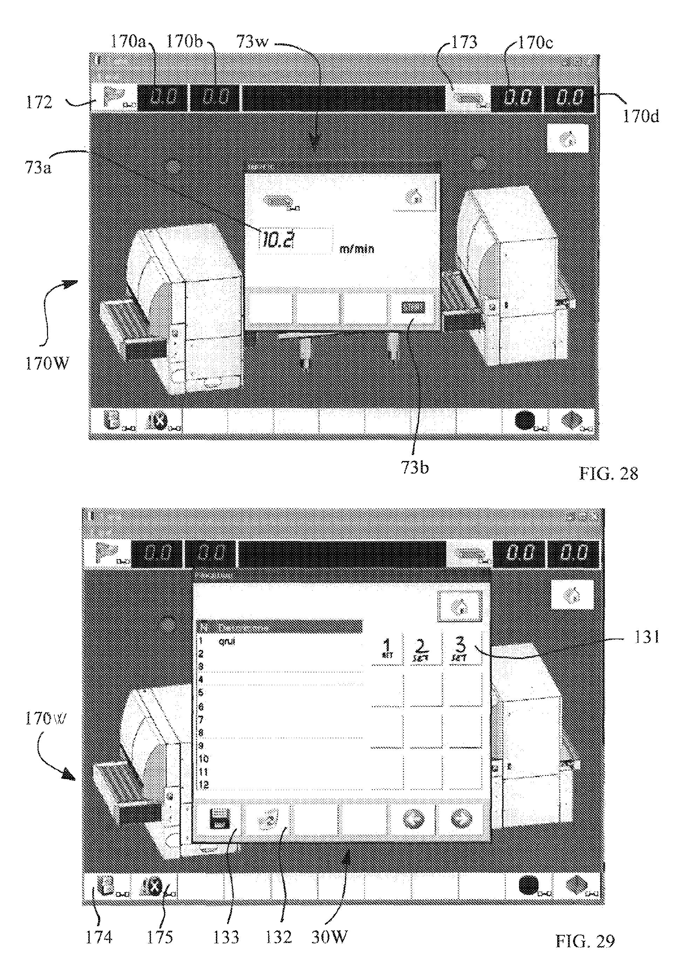

A speed programming key 173 opens a speed adjusting window 73W to run the speed programming phase 73 (Figure 28). In this window it is possible to fix the common value of the advance speed of the conveying belts of the machines 2, 2' (speed box 73a). A respective activation key 73b makes the introduced settings active.

The line programming window 170w further comprises a programme management key 174 and an alarm management key 175 that enable the work programmes management procedure 30 and the alarms management procedure 40 to be called up respectively.

The programmes management key 174 opens the programme management window 30W in which the work programmes stored in the second management and control means 4 are displayed and enables work programmes to be loaded (phase 31), deleted (phase 32) and stored (phase 33).

The programmes management key 174 opens the alarms management window 40W that enables the details and the corresponding diagnostics of each alarm (phase 41) to be displayed and/or all the active alarms (phase 42) to be reset.

From the initial status 100 in which the machine is stationary, for example to enable the various programming and configuration procedures disclosed above to be run, it is possible to pass to an operation status 300 in which the machine 2 is operational for calibrating/sanding elements 10. The operation of the machine can occur in an automatic manner on the basis of the data stored in the selected and active work programme or in manual mode, driving separately and singularly the operational units and devices on the machine.

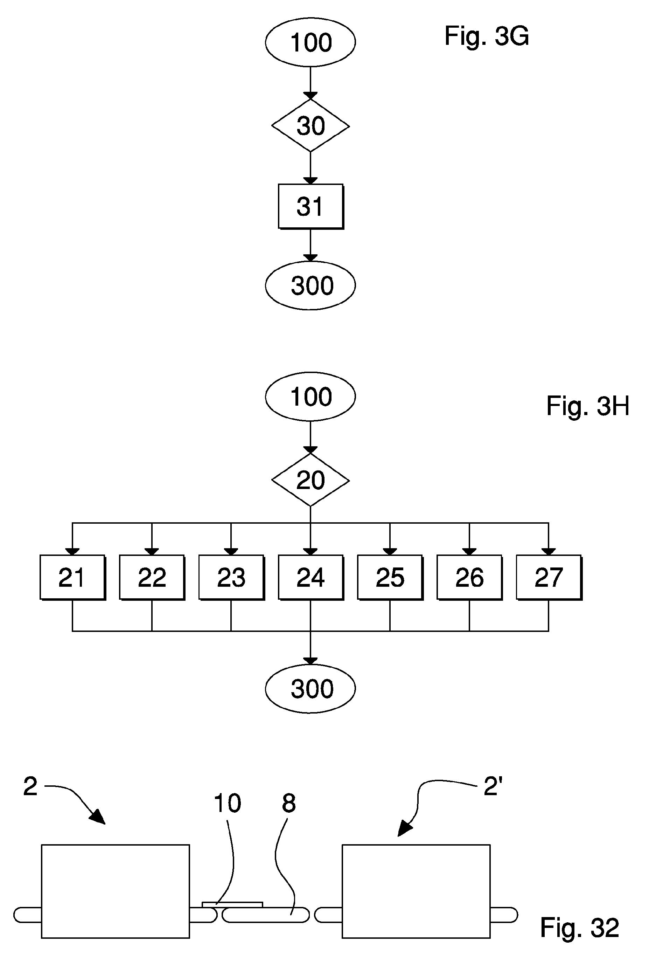

During automatic operation, schematised in Figure 3G with the respective block diagram, in the initial status 100 there is provided entering the work programmes management procedure 30, selecting and loading a work programme by means of the loading phase 31. With the work programme active by means of a start key 110 found in the main window 100W, the PLC 3 of the machine 2 is instructed to carry out an initial complete positioning of the operational means and then to start up the machine 2 sending the work programme to the processor of the PLC.

The machine is stopped by means of a stop key 111.

During manual operation, schematised in Figure 3H with the respective block diagram, starting up the operational means separately and individually is provided using the respective programming and adjusting procedures 21-27 in the calibrating and adjusting procedure 20. In this manner it is possible to start up the conveying means 11 by means of the programming windows and to adjust the advance speed thereof, activate the vacuum means 19 connected to the conveyor belt, start up the calibrating/sanding means motors 13, 14, 15, 16 and adjust the speed thereof, activate the blowing means 18 to clean the abrasive belts, etc.

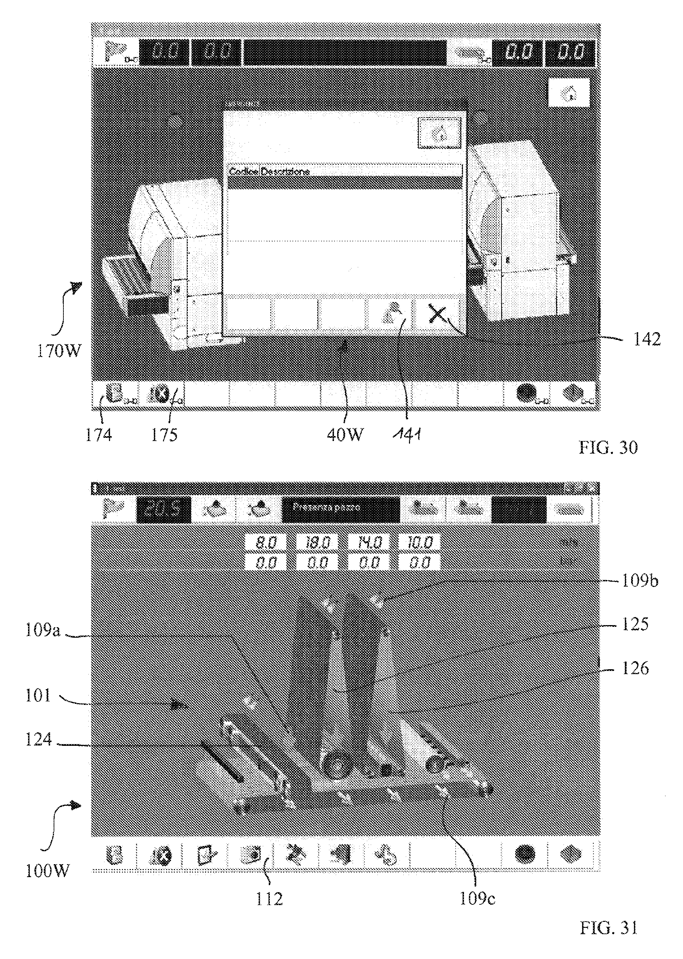

The operation of the machine 2 is dynamically displayed in the main window 100W by means of graphic elements 109a, 109b, 109c, for example arrows, that appear at operational means in concomitance with the intervention of the latter. With particular reference to Figure 31, the intervention of the first sanding means 13 is, for example, indicated by a vertical arrow 109a directed to the conveyor belt. The transit of the element 10 through the machine 2 is displayed in real time by means of a corresponding movable graphic element in screen 6a. The rotation of the abrasive belts of the operational means is displayed dynamically.

It is possible to modify, by means of a view change key 112 in the main window 100W the view of Figure 101 that represents schematically the machine 2, for example by choosing between a perspective/axonometric view, a frontal or lateral view in an orthogonal projection.

### Block diagram legend

Figure 3A
   - 100: initial status of machine programming;
   - 20: calibrating and adjusting procedure;
   - 30: work programmes management procedure;
   - 40: alarms and diagnostics management procedure;
   - 50: utility management procedure;
   - 200: protected configuration status machine;
   - 60: general configuration procedure;
   - 70: combined line management procedure (initial programming status);
   - 70': combined line management procedure (protected configuration status);
   - 300: operation status machine.
Figure 3B
   - 20: calibrating and adjusting procedure;
   - 21: sanding thickness adjusting phase;
   - 22: adjusting step for adjusting the conveyor belt 11 advance speed;
   - 23: adjusting step for adjusting the vacuum means 19;
   - 24: adjusting step for adjusting and programming the first operational means 13;
   - 25: adjusting step for adjusting the second operational means 14;
   - 26: adjusting step for adjusting the third operational means 15;
   - 27: adjusting step for adjusting the fourth operational means 16.
Figure 3C
   - 30: work programmes management procedure;
   - 31: work programme loading phase;
   - 32: work programme deletion phase;
   - 33: work programme storing phase.
Figure 3D
   - 40: alarms and diagnostics management procedure;
   - 41: phase of displaying details and diagnostics relating to a selected active alarm;
   - 42: active alarms zeroing or resetting phase.
Figure 3E
   - 70: combined line management procedure with the system in initial programming status;
   - 72: sanding thickness programming phase;
   - 73: phase of programming advance speeds of the conveyor belts;
Figure 3F
   - 100: initial machine programming status;
   - 50: utility management procedure;
   - 51: phase of testing first management and control means 3 (PLC);
   - 52: reading means 12 testing phase;
   - 53: phase of testing pad buffers of the first operational means 13 and of third operational means 15;
   - 54: production parameters displaying phase;
   - 55: phase of checking wear to abrasive belts of the sanding operational means;
   - 56: general settings defining phase;
   - 57: phase of storing a list containing the machine configuration parameters and the work programme in use;
   - 58: phase of accessing and consulting the technical documentation of the machine;
   - 59: machine emptying phase;
   - 250: identification key insertion phase;
   - 200: machine configuration protected status;
   - 253: phase of testing the sectioned pads of the first operational means 13 and of the third operational means 15;
   - 60: general configuration procedure;
   - 61: general machine parameters configuration phase;
   - 62: phase of configuring sanding thickness management parameters;
   - 63: phase of configuring conveyor belt 11 advance speed parameters;
   - 64: configuration phase of the vacuum means 19;
   - 65: configuration phase of the first operational means 13;
   - 66: configuration phase of the second operational means 14;
   - 67: configuration phase of the third operational means 15;
   - 68: configuration phase of the fourth operational means 16;
   - 69: alarms and emergencies configuration phase;
   - 70': combined line management procedure with the system in the protected configuration status;
   - 71: combined line configuration phase;
Figure 3G
   - 100: initial programming status;
   - 30: work programmes management procedure;
   - 31: work programme loading phase;
   - 300: machine operation status;
Figure 3H
   - 100: initial programming status;
   - 20: calibrating and adjusting procedure;
   - 21-27: operational means programming and adjusting phases;
   - 300: operation status of the machine.

## Claims

1. Method for managing and controlling an operating machine (2) for machining elements (10), in particular a sanding machine, provided with a management and control system (1) for managing and controlling operational means (11, 12, 13, 14, 15, 16, 17, 18, 19) of said machine (2), provided with interface means (6) for an operator, comprising entering and/or sending data and/or adjusting and/or operating operational parameters of said machine (2) via said interface means (6), said entering and/or sending comprising running operational procedures (20, 30, 40, 50, 60, 70, 70') by means of said system (1) and displaying on said interface means (6) interactive work windows (100W, 200W, 21W, ...) for activating and/or controlling said operational procedures (20, 30, 40, 50, 60, 70, 70').

2. Method according to claim 1, further comprising receiving operational data and/or parameters from said machine (2).

3. Method according to claim 1 or 2, wherein said sending operational data and/or parameters comprises sending work programmes for driving said operational means (11, 12, 13, 14, 15, 16, 17, 18, 19) so as to run defined sequences and/or processes for machining said elements (10).

4. Method according to any previous claim, comprising storing said operational data and/or parameters in storage means of said system (1).

5. Method according to claim 4, comprising calling up operational data and/or parameters stored in said storing means.

6. Method according to any previous claim, wherein said inserting comprises modifying and/or varying said operational data and/or parameters.

7. Method according to any previous claim, wherein each of said operational procedures (20, 30, 40, 50, 60, 70, 70') comprises at least an operational step.

8. Method according to any previous claim, wherein said activating and/or managing said operational procedures (20, 30, 40, 50, 60, 70, 70') comprises interacting with touchscreen screen means (6a) of said interface means (6).

9. Method according to claim 8, as appended to claim 7, wherein said interacting comprises touching defined sensitive areas of said screen means (6a) to run operational steps of said operational procedures, in particular for inserting, modifying, sending, receiving operational data and/or parameters.

10. Method according to claim 9, wherein displaying function keys (120, 121, 122, 123, ...) and/or figures (124, 125, 126, ...) in each of said interactive work windows (100W, 200W, 21W, ...) and at said defined sensitive areas function keys (120, 121, 122, 123, ...) and/or figures (124, 125, 126, ...) is provided.

11. Method according to claim 9 or 10, wherein displaying in each of said interactive work windows (100W, 200W, 21W, ...) boxes and/or squares (121b, 121c, 122b, ...) to display and/or enter and/or modify said operational data and/or parameters is further provided.

12. Method according to any previous claim, comprising managing and controlling respective operational means of a further operating machine (2') connected online to said operating machine (2).

13. Method according to any previous claim, comprising activating said system (1) in an initial programming status (100) to run at least an operational procedure chosen from a group comprising: calibrating and adjusting procedure (20) of operating parameters of said machine (2), work programmes management procedure (30), alarms and diagnostics management procedure (40), utilities management procedure (50), combined online management procedure (70).

14. Method according to claim 13; wherein said calibrating and adjusting procedure (20) comprises at least the following steps:
- adjusting step for adjusting (21) a sanding thickness of elements to be machined (10);
- adjusting step (22) for adjusting an advance step of conveying means (11) of said machine (2);
- adjusting step (23) for adjusting vacuum means (19) of said machine (2) arranged for facilitating the adhesion of said elements (10) to said conveying means (11);
- at least an adjusting and programming step (24, 25, 26, 27) for adjusting and programming sanding operational means (13, 14, 15, 16).

15. Method according to claim 13 or 14, wherein said management procedure (30) for managing work programmes comprises a loading phase (31) for loading a work programme; a deleting phase (32) for deleting a work programme; a storage phase for storing (33) a work programme.

16. Method according to any one of claims 13 to 15, wherein said alarms and diagnostics management procedure (40) comprise a display phase (41) of displaying the details and diagnostics relating to a selected active alarm and a resetting phase (42) of resetting active alarms and restoring the system (1).

17. Method according to any one of claims 13 to 16, wherein said utility management procedure (50) comprises the following steps:
- phase (51) of testing correct operation of first management and control means (3) of said system (1);
- phase (52) of testing correct operation of reading means (12) of said machine (2);
- phase (53) of testing correct operation of pad means of sanding operational means (13, 14) of said machine (2);
- phase (54) of displaying production parameters;
- phase (55) of testing the consumption of abrasive tap of said sanding operational means (13, 15);
- phase (56) of defining general settings of the machine (2);
- phase (57) of storing a list containing configuration parameters of said machine (2) and of a work programme in use;
- phase (58) of accessing and consulting technical documentation of the machine (2);
- phase (59) of emptying the machine (2) for the exit from the latter of a partially machined (10) element;
- phase (250) of inserting an identification key for the passage of said system (1) from the initial programming status (100) to a protected configuration status (200).

18. Method according to any one of claims 13 to 17, as claim 13 is appended to claim 12, wherein said combined line management procedure (70) comprises a phase (72) of programming a sanding thickness of said elements (10) to be machined by acting on the machine (2) and on the further machine (2'); a phase (73) of programming a common advancing speed of conveying means of said machine (2, 2').

19. Method according to claim 17, comprising taking said system (1) to said protected configuration status (200) for running a protected operational procedure selected from a group comprising: general configuration procedure (60) for configuring said machine (2), combined online protected management procedure (70').

20. Method according to claim 19, as claim 17 is appended to claim 14, wherein said general configuration procedure (60) comprises the following steps:
- phase (61) of configuring general parameters of said machine (2);
- phase (62) of configuring parameters relating to managing a sanding thickness to be made on said elements (10);
- phase (63) of configuring parameters relating to an advance speed of said conveying means (11) of said machine (2);
- phase (64) of configuring said vacuum means (19);
- at least a phase (65, 66, 67, 68) of configuring said sanding operational means (13, 14, 15, 16);
- phase (69) of configuring alarms and emergencies;

21. Method according to claim 12 and claim 19 or 20, wherein said protected combined line management procedure (7.0') comprises a phase (71) of configuring a line comprising said machine (2) and said further machine (2').

22. Method according to any previous claim, comprising taking said system (1) to an operation status (300) wherein said machine (2) is in function and runs sequences and/or operational processes for machining said elements (10).

23. Method according to claims 15 and 22, wherein said placing said system (1) in said operation status (300) comprises running said phase (31) of loading a work programme of said management procedure (30) for managing work programmes and activating said machine (2).

24. Method according to claims 14 and 22, wherein said placing said system (1) in said operation status (300) comprises running at least an adjusting step (21; 22, 23, ...) of said calibrating and adjusting procedure (20) and singularly activating said operational means (11, 12, 13, ...).

25. Programme that comprises a code for implementing the method according to claims 1 to 24, when the programme is run by a computer system.

26. Support that is readable by a computer and carries a programme that is defined in claim 25.

27. System for transmitting and managing data of an operating machine (2), in particular a sanding machine, according to the method according to claims 1 to 24, comprising first control and management means (3) for controlling and driving said machine (2) and second control and management means (4) provided with interface means (6) for an operator and connected to said first control and management means (3), said control and management means (4) being arranged for processing via said interface means (6) operational work parameters and/or programmes to be sent to said first control and management means (3) for controlling and/or managing adjustments and/or operation of said machine (2).

28. System according to claim 27, wherein said first control and management means (3) comprises an industrial computer or programmable logic controller PLC, that is able to process analogue and/or digital signals coming from, and/or directed to, operational means (11, 12, 13, 14, 15, 16, 17, 18, 19) of said machine (2).

29. System according to claim 27 or 28, wherein said second control and management means (4) includes a computer or personal computer PC.

30. System according to claim 27 or 28, wherein said second control and management means (4) comprises a programmable operator terminal.

31. System according to any one of claims 27 to 30, wherein said interface means (6) comprises an interactive touchscreen (6a).

32. System according to any one of claims 27 to 31, further comprising connecting means (5) suitable for connecting said first control and management means (3) and said second control and management means (4).

33. System according to claim 32, wherein said connecting means (5) comprises transmitting means for transmitting data by means of standard protocols, in particular CAN BUS, Profibus, Modbus transmission channels.
